# EUROPEAN PATENT APPLICATION

(11) **EP 2 074 891 A1**
(43) Date of publication of application: **01.07.2009**
(21) Application number: 07150306.4
(22) Date of filing: 21.12.2007
(51) Int. Cl.: A23L 1/05, A23L 1/30, A23L 1/305

(54) **New hunger-suppressing food compositions**

(71) Applicant: Nederlandse Organisatie voor Toegepast- Natuurwetenschappelijk Onderzoek TNO, 2628 VK Delft (NL)
(72) Inventor: De Jong, Govardus Adrianus Hubertus,, 3826 AC Amersfoort, (NL)
(74) Representative: Hatzmann, Martin

(57) **Abstract**

The invention concerns a satiety-inducing food composition, which is fluid at neutral pH and shows an increase in viscosity at acid pH, wherein the composition comprises at least a negatively loaded carbohydrate and at least a protein with an iso-electric point of about pH 3.5 - 5.5.

## Description

The invention relates to the field of nutrition, more specifically the field of food compositions enhancing a satiety effect.

Obesity is the welfare-disease, since it is mainly caused by excessive intake of food. The incidence of obesity and the number of people considered overweight has dramatically increased in countries where a so-called Western diet is adopted. Obesity and overweight are generally seen as important factors in a variety of diseases such as diabetes (type 2), hypertension, atherosclerosis and heart diseases. Furthermore, an ethic effect is involved since overweight and obese people are generally considered less attractive.

The most effective treatment of obesity is by decreasing the amount of calorie intake. This is achieved by simply reducing the amount of calories consumed, such as is done in the numerous diets that are available. Alternatively, intake of calorie poor food, the so called 'light' food products, is suggested for obesity patients. Further, there are drugs on the market that interfere e.g. with the enzymatic activity of the digestive system, and that thereby cause a decrease in calorie uptake. Also drugs that combat the effects of calorie intake such as cholesterol lowering drugs are heavily used worldwide. However, the use of drugs is often not preferred unless strictly required for medical purposes.

A general problem with food products intended to be used in a weight loss or a weigh maintenance plan, e.g. low-calorie food stuffs, is that feelings of hunger rest after food intake. Thus, the feeling of satiety obtained may not be as great as desired. This has led to research into satiety-inducing food products in order to increase the satiety effect from consuming a food product.

Several satiety-inducing food products have been proposed in the prior art. Products on the market rely on viscosity enhancers, high protein content or in some cases to special components for instance retrieved from plants. The main goal of all these approaches is to increase the feeling of satiety, which amongst others can be achieved by an increase in viscosity of the ingested food to enable a slower throughput in the stomach. A typical example is disclosed in EP 323 510 and EP 333 858, which show a composition of water-soluble fibres and proteins that jellifies in the acid stomach juice. Also US 2005/0084592 discloses a compositions which forms a gel in the stomach, wherein said composition comprises a ionic polysaccharide (such as an alginate) and protein.

However, there is still need for alternative satiety-inducing food products.

### SUMMARY OF THE INVENTION

The inventors now found a satiety-inducing food composition that is fluid at neutral pH and shows an increase in viscosity by the formation of a gel at acid pH, wherein the composition comprises at least a negatively loaded carbohydrate and at least a protein with an iso-electric point of about pH 3.5 - 5.5. Preferably, the protein has an iso-electric point of about pH 4 - 5. The carbohydrate can be preferably chosen from pectin, carrageenan, xanthan, and the likes. Said carbohydrate is present in an amount from 0.25 to 30% by weight of the total composition, preferably from 0.5 to 5 % by weight

Preferably the protein is selected from the group consisting of whey proteins (e.g. a protein isolate or hydrolysate from whey), β-lactoglobulin, α-lactalbumin, and bovine serum albumin and is present in an amount from 5 to 25% by weight of the total food preparation, more preferably from 5 to 15% by weight.
Optionally, the satiety-inducing food composition additionally comprises one or more ingredients selected from the group consisting of lipids, such as vegetable fats, animal fats and mono-, di- or tri-glycerides; emulsifiers, such as lecithin and egg yolk; flavourants; herbs; spices; colorants; fruit or vegetable particles, concentrates, juice or puree; cholesterol lowering agents, such as isoflavones and phytosterols; energizers, such as caffeine, thein, cathechins, capsaicinoids and canitine; vitamins; sweeteners; antioxidants; preservatives; probiotics; minerals and alkaline metals.

In a preferred embodiment the composition is a satiety-inducing food composition according wherein the protein is preheated before adding to the composition. Said preheating comprises about 30 min incubation at 75 °C or more, preferably about 30 min at 90 °C and can be performed in the absence or presence of the carbohydrate.
The invention further is directed to a method to produce a satiety-inducing food composition according to invention comprising solving at least a negatively charged carbohydrate and at least a protein with an iso-electric point of about pH 3.5 - 5.5 in a fluid at neutral pH. Said fluid preferably is chosen from water, milk, tea, coffee, yogurt or any other dairy product, fruit juice, or vegetable juice.

In a preferred embodiment the method comprises preheating of the protein before addition to the composition.

In a further embodiment, the invention is directed to a solid satiety-inducing food composition, preferably a food bar, wherein said composition comprises at least a negatively loaded carbohydrate and at least a protein with an iso-electric point of about pH 3.5 - 5.5 in which the carbohydrate and protein dissolve in the mouth and stomach, wherein said composition is fluid when solved at neutral pH and increase in viscosity and forms a gel when solved at acid pH.

### LEGENDS TO THE FIGURES

Fig. 1. Solubility of cold and heated whey protein with HM pectin as a function of pH.
Fig. 2. Solubility of native and heated whey protein with low methylated pectin as a function of pH. All presented curves represent 5% protein and 1% LM pectin.
Fig. 3. Solubility of cold and heated whey protein with iota and kappa carrageenan as a function of pH. All presented curves represent 5% protein and 1% carrageenan. Heated samples gelled at pH ≥ 3.0.
Fig. 4. Solubility of cold and heated whey protein with xanthan as a function of pH. All presented curves represent 5% protein and 0.5% xanthan.
Fig. 5. Viscosity of whey/carbohydrate mixtures during titration with 1 M HCl. Carbohydrate A = LM pectin; carbohydrate B = kappa carrageenan; carbohydrate C = xanthan.
Fig. 6. **A.** 15% SDS-PAGE of pepsin digestion of unheated whey. The numbers below are the incubation times corresponding to the samples in this lane; **B.** 15% SDS-PAGE of pepsin digestion of heated whey; **C.** 15% SDS-PAGE of pepsin digestion of unheated whey with 1% LM pectin; **D.** 15% SDS-PAGE of pepsin digestion of heated whey with 1% LM pectin; **E.** 15% SDS-PAGE of pepsin digestion of whey with 1% pectin heated together.
Fig. 7. **A.** SDS-PAGE of residue samples after digestion in TIM with pepsin. Lane 1: molecular weigh marker; Lane 2: whey unheated + pectin; Lane 3: whey heated + pectin; Lane 4: whey unheated + xanthan; Lane 5: whey heated + xanthan; Lane 6: whey protein isolate; **B.** SDS-PAGE of samples after digestion in TIM with pepsin. Lane 1: molecular weigh marker; Lane 2: whey unheated + xanthan 0-30 min; Lane 3: 30-60 min; Lane 4: 60-90 min; Lane 5: 90-120 min; Lane 6: whey heated + xanthan 0-30 min; Lane 7: 30-60 min; Lane 8: 60-90 min; Lane 9: 90-120 min; Lane 10: whey protein isolate.

### DETAILED DESCRIPTION

The present invention is based on the phenomenon of complex coacervation. In the complex coacervation as presented herein, a predominantly positively loaded protein will complex with a negatively charged carbohydrate to form the complex coacervate. Formation of the complex is predominantly dependent on the charge of the protein. The charge of a protein is 0 at its iso-electric point. Lowering the pH of a protein solution will result in loss of negative charges and formation of positive charges leading to an overall positively charged protein. The positive charges will interact with a negatively charged carbohydrate on bases of electrostatic interaction and thus complexes between the proteins and carbohydrates are formed, leading to an increased viscosity of the solution and dependent on the conditions even to gelation of the mixture in the stomach.

Since this coacervation process needs to take place in the stomach and not during the production or storage of the satiety-inducing food composition, it is preferred to have proteins with an iso-electric point of about pH 3.5 - 5.5. More preferably, the protein has an iso-electric point of about pH 4.0 - 5.0. The iso-electric point should be preferably below 7, since food compositions tend to have a slightly acid pH (about 6.0). In such a case, the protein is negatively charged when not in an acid environment and thus the coacervation complex formation does not occur.

Any protein having an iso-electric point in the preferred range may be usable, but the present inventors have found that whey proteins are especially preferred, because the main constituents of whey, β-lactoglobulin and α-lactalbumin have an iso-electric point of 5.1 and 4.4, respectively.

During the experiments on this new type of satiety-inducing food preparations, the inventors also observed that although sufficient complex coacervation was reached, sometimes the complex would still dissolve at a pH below 4, caused by protonation of the carboxyl groups and thereby by decreasing the negative charge of the carbohydrates which results in a poorer coacervation complex formation. To solve this, the principle of cold gelation was used, which consists of heating a protein solution at relatively high pH (i.e. a pH above the iso-electric point) without addition of salts. In the Examples heating of a 10% whey solution of pH 7 was performed for 30 min at 90 °C.

During this heating protein aggregates are formed, which stay in solution, but which will precipitate at lower pH, thus causing formation of a gel. The combination of the coacervation complex technique and the principle of cold gelation appeared to have optimal results under the currently tested conditions.

The carbohydrates used in the present invention can be any carbohydrates, as long as they are negatively charged. Examples of such carbohydrates are xanthan, pectin, iota and kappa carrageenan, gum arabic, and alginate. The amount of said negatively charged carbohydrate in the food composition will vary according to the composition and also, where required, according to national or regional legislation. Preferably, the amount of carbohydrates lies from 0.25 to 30 % by weight of the total composition, more preferably from 0.5 to 5% by weight.

Proteins with an iso-electric point as described above can be obtained from any readily available source. One of the preferred sources, as indicated above, is whey proteins, which contain the suitable β-lactoglobulin and α-lactalbumin (obtainable as a protein isolate or hydrolysate from whey). These are especially preferred, because whey proteins are a cheap and easily obtainable commodity. Alternative sources of protein with iso-electric points in the desired range are egg protein, soy protein, gelatin and wheat protein The amount of proteins used in the food preparations is from 5 to 25% by weight of the Total food preparation, more preferably from 5 to 15% by weight

The food composition can be any composition such as an aqueous liquid or a spoonable composition, for which it also can be produced as concentrate or powder that is to be solved in a fluid before ingestion. Also solid foods can be prepared including the above mentioned constituents. When such a solid food (e.g. a bar) is digested, the carbohydrate and the protein will solve in the saliva and/or the stomach fluid and a similar increase in viscosity and gelation will be achieved. Thus, the invention in one embodiment is directed to a solid satiety-inducing food composition, preferably a food bar, wherein said composition comprises at least a negatively loaded carbohydrate and at least a protein with an iso-electric point of about pH 3.5 - 5.5 in which the carbohydrate and protein dissolve in the mouth and stomach, wherein said composition is fluid when solved at neutral pH and increase in viscosity and forms a gel when solved at acid pH.

Suitable types of food compositions according to the invention include dairy or vegetable based drinks such as milky or soy based drinks; oil-in-water emulsions (such as dressings); creams; desserts such as mousses, custards, rice or other similar puddings, yogurts; frozen confectionary including ice cream, water ices, sorbets and frozen yogurts; breakfast type cereal products such as porridge; soups, sauces, sport drinks, fruit juices etc. In solid form the foods can be presented as bars, ingots, cookies, crisps and other snack foods, and the like.

The food composition of the invention may comprise one or more of the following optional ingredients.

The compositions of the invention may further comprise encapsulated satiety agents which are predominantly released in the intestines. Suitable satiety agents include lipids, especially mono, di or tri-glycerides, their free fatty acids, their edible salts, their non-glyceryl esters, hydrolyzable in the presence of gastro-intestinal enzymes, and mixtures thereof. These satiety agents may be encapsulated in any suitable cross-linked encapsulating agent whereby they are predominantly released in the intestines. Encapsulant materials comprising gelatin and at least one of gum arabic, carrageenan, agar agar, alginate or pectins, especially gelatin and gum arabic, have been found to be very suitable. These encapsulated satiety agents may be included in suitable amounts.

The composition may comprise one or more emulsifiers. Any suitable emulsifier may be used, for example lecithins, egg yolk, egg-derived emulsifiers, diacetyl tartaric esters of mono, di or tri glycerides or mono, di, or triglycerides. The composition may comprise an amount of from 0.05 to 10% by weight, preferably from 0.5% to 5% wt of the emulsifier based on the weight of the product.

Flavourings are preferably added to the edible compositions in amounts that will impart a mild, pleasant flavour. The flavouring may be any of the commercial flavours typically employed. When a non-savoury taste is desired the flavours are typically selected from varying types of cocoa, pure vanilla or artificial flavour, such as vanillin, ethyl vanillin, chocolate, malt, mint, yogurt powder, extracts, spices, such as cinnamon, nutmeg and ginger, mixtures thereof, and the like. It will be appreciated that many flavour variations may be obtained by combinations of the basic flavours. When a savoury taste is desired the flavours are typically selected from varying types of herbs and spices. Suitable flavourants may also include seasoning, such as salt, and imitation fruit or chocolate flavours either singly or in any suitable combination. Flavourings which mask off-tastes from vitamins and/or minerals and other ingredients are preferably included in the edible compositions.

The edible compositions may comprise one or more conventional colourants, in conventional amounts as desired.

The composition may also comprise 0.1 to 5% by weight of edible buffering salts based on the weight of the composition. Any suitable edible buffering salt may be used, although care should be taken not to use amounts that would counteract the increase in viscosity and forming of a gel.

The composition may comprise up to 60% by weight of fruit or vegetables particles, concentrates, juice or puree based on the weight of the composition. Preferably the composition comprises 0.1 to 40% wt, more preferably 1 to 20% wt of these ingredients. The amount of these ingredients will depend upon the type of product; for example soups will typically comprise higher levels of vegetables than will a milk based meal replacement drink.

The composition may additionally comprise sweeteners, such as saccharine, fructose, aspartamic acid, and the like, in conventional amounts.

The composition may comprise one or more cholesterol lowering agents in conventional amounts. Any suitable, known, cholesterol lowering agent may be used, for example isoflavones, phytosterols, soy bean extracts, fish oil extracts, tea leaf extracts.

The composition may optionally comprise, in suitable amounts, one or more agents which may beneficially influence (post-prandial) energy metabolism and substrate utilisation, for example caffeine, flavonoids (including tea catechins, capsaicinoids and canitine). Also, the composition may comprise low amounts of ethanol.

The composition may comprise up to 10 or 20% by weight, based on the weight of the composition, of minor ingredients selected from added vitamins, added minerals, herbs, spices, antioxidants, preservatives or mixtures thereof. Preferably the composition comprise an amount of from 0.05 to 15% by weight, more preferably 0.5 to 10% wt of these ingredients.

The composition preferably comprises added vitamins selected from at least one of Vitamin A Palmitate, Thiamine Mononitrate (Vitamin B1), Riboflavin (Vitamin B2), Niacinamide (Vitamin B3), d-Calcium Pantothenate (Vitamin B5), Vitamin B6, Vitamin B11, Cyanocobalamin (Vitamin B12), biotin, Ascorbic acid (Vitamin C), Vitamin D, Tocopheryl Acetate (Vitamin E), Biotin (Vitamin H), and Vitamin K. The composition also preferably comprises added minerals selected from at least one of; calcium, magnesium, potassium, zinc, iron, cobalt, nickel, copper, iodine, manganese, molybdenum, phosphorus, selenium and chromium. The vitamins and/or minerals may be added by the use of vitamin premixes, mineral premixes and mixtures thereof or alternatively they may be added individually.

In particular the edible compositions preferably comprise alkaline metals such as sodium and/or potassium.

Calcium is preferably present in the edible compositions in amounts of from 5 to 50% of the amounts given in the European Commission Directive 96/8/EC of 26 February 1996 on foods intended for use in energy-restricted diets for weight reduction, more preferably about 10 to 35%, most preferably 15 to 35% per serving. Any suitable calcium source may be used. The calcium source may be used as a part, or the whole, of any calcium present as the non-solubilised divalent metal ion source.

It is preferred that the edible compositions comprise potassium, especially in an amount of at least 300 mg of potassium per serving of the edible composition, more preferably 400-1000, most preferably 450-700 mg. Any suitable potassium source may be used.

One or more of the above-mentioned vitamins and minerals are preferably present at amounts of from 5 to 45% of the amounts given in the above European Commission Directive 96/8/EC, especially 5 to 40%, most especially 10 to 30%.

Other ingredients which may be present in the compositions include, but are not limited to, rolled oats, chocolate chips or other chocolate pieces, cookie and/or cookie dough pieces, fruit pieces, such as dried cranberry, apple, etc., vegetable pieces such as rice, honey and the like. The type of edible composition will of course dictate the type and amount of optional ingredients used, while also care should be taken not to jeopardize the viscosity increasing and gel forming capabilities of the main ingredients.

Further, the food compositions may contain probiotics, such as bacteria of the species *Lactobacillus lactis, Bifidobacterum animalis, Bifidobacterium bifidum, Bifidobacterum breve, Bifidobacterum infantis, Bifidobacterum lactis, Bifidobacterum longum, Lactobacillus acidophilus, Lactobacillus amylovorus, Lactobacillus casei, Lactobacillus crispatus, Lactobacillus delbrueckii ssp., Lactobacillus rhamnosus MX1, Lactobacillus gallinarum, L. gasseri, Lactobacillus helveticus MR220, Lactobacillus johnsonii, Lactobacillus paracasei, Lactobacillus reuteri, Lactobacillus rhamnosus, Saccharomyces boulardii, Streptococcus thermophilus* and *Streptococcus sanguis.*

The composition of the invention may be prepared by any suitable conventional technique. Such techniques are well known to those skilled in the art and do not need to be described further here but may include mixing, blending, homogenising, high-pressure homogenising, emulsifying, dispersing, or extruding. The composition may be subject to a heat treatment step, for example pasteurisation or U.H.T. treatment.

Consuming a composition according to the invention is intended to enhance and/or prolong the feeling of satiety for the consumer and/or extend the time interval between meals and/or reduce the amount of calories consumed in the following meal. This in turn aids the individual concerned to better adhere to a weight loss or weight control plan.

The consumption of a composition according to the invention may occur as a part of a dietary plan, such as those to reduce or control body weight. The edible composition of the present invention may be consumed as desired. Preferably a composition is consumed at least daily in order to provide advantageous satiety effects, more preferably at least twice daily.

The food composition may be consumed by a human or an animal in connection with any one or more of the following; the treatment or prevention of obesity or being overweight; to improve or maintain the perception of body image; aiding compliance with a dietary plan e.g. to control, reduce or maintain body weight, including maintenance of desired body weight following previous weight loss; to extend the time elapsed between taking meals; to control, maintain or reduce daily calorie intake; to suppress appetite. The subject following that plan may be thus better able to reduce, control or maintain their body weight, e.g. by following the dietary plan for a longer period of time and/or adhering more closely to the plan as they feel less temptation to snack or over-eat.

The term "weight control or weight loss plan" as used herein includes regimes, plans and diets followed for controlling body weight and also those followed for medical reasons e.g. to loose weight or to aid other health problems adversely affected by being overweight or obese.

The invention is further exemplified by the following examples, which are to be understood as to be non-limiting. Further examples within the scope of the invention will be apparent to the person skilled in the art.

### EXAMPLES

Whey protein isolate (Bipro) was obtained from Davisco. Low methylated (LM) pectin (Unipectine OF 100C , 3 to 12 % methylated) and high methylated (HM) pectin (Unipectine OH 959, 47 to 53 % methylated) were obtained from Degussa. Xanthan gum (E415 food fine grade) was obtained from Jungbunzlauer. Iota-carrageenan and kappa carrageenan were obtained from Aldrich. Pepsin was obtained from Sigma.

### Example 1 Structure formation through complex coacervation

### Precipitation behaviour

In order to investigate the interaction of proteins with charged carbohydrates at various pH, 100 ml whey protein (10%) was mixed with 100 ml carbohydrate (2%) in a one to one ratio to finally obtain a 5% protein/1% carbohydrate solution. The exception was xanthan of which a 1% solution was used to obtain a final concentration of 0.5%. The 10% whey protein solution was prepared in two ways: a blank sample and a sample that was heated for 30 min at 90°C.

After mixing the two solutions, the pH was measured and a sample of 10 ml was taken and poured into a test tube. The pH of the mixture was lowered by the addition of 1M HCl. At pH 6.5, 6.0, 5.5, 5.0, 4.5, 4.0, 3.5, 3.0, 2.5, 2.0, 1.5 and 1.0 samples were taken. All samples were centrifuged. 10 µl of the supernatant was mixed with 1000 µl 100 mM Tris/HCl pH 8.5 and the absorbance at 280 nm was measured to analyse the amount of protein in the supernatant.

### pH profile

In order to generate a pH profile similar to what happens in the stomach, the effect of acid addition to protein/carbohydrate solutions was tested. To a solution of 5% whey (100 ml) with or without carbohydrate, 100 µl 1 M HCl was added. The solution was stirred and the pH measured. This procedure was repeated until pH 1.7 was reached.

### Viscosity measurements

Viscosity was measured in a Brabender Viscograph (TUI 75925002). 300 ml sample was used for measuring viscosity. Temperature control was used to set the temperature to the desired values. 1 M HCl was added with a FPLC pump to simulate the pH profile of the stomach. Pump speed was calculated from the results of the pH profile measurements. Viscosity was calculated in Brabender units, which is not an official unit.

### Complex coacervation of whey protein with pectin

### High methylated pectin

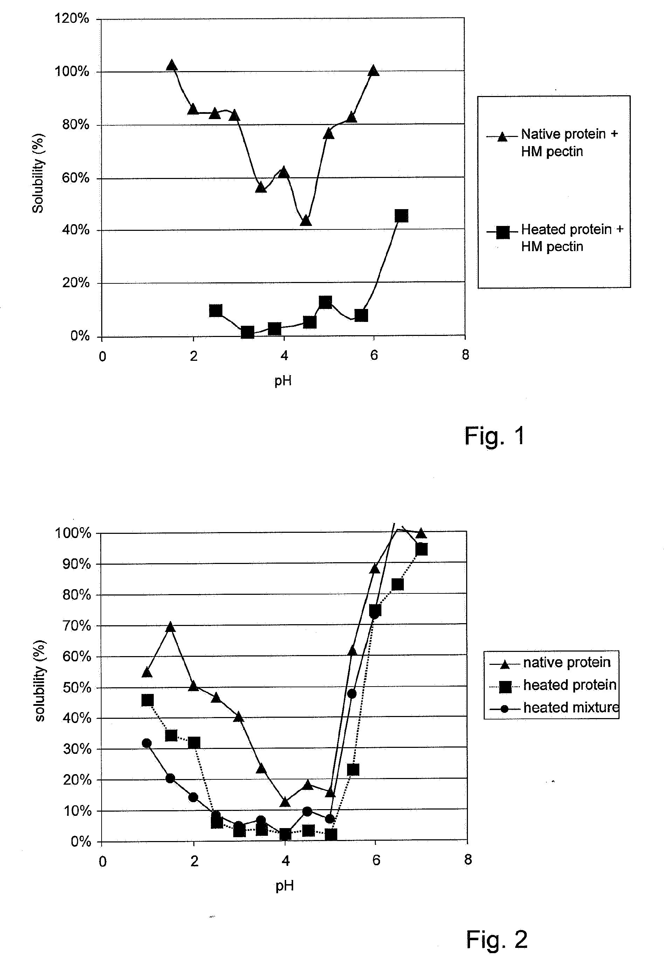

When pectin was added to the whey protein at pH 7, the solution was still mostly clear. Lowering the pH resulted in complex formation (complex coacervation). After centrifugation of the samples there was a clear white pellet at pH 4.5-2.9. At pH 5 the suspension was turbid and it seems that a gel like structure was obtained. At pH 6, there was almost no pellet. When the supernatants were analysed (see Fig. 1), it was clear that at around pH 4 there was a maximum in the amount of precipitated protein. It has to be mentioned that around this pH still 40% protein remained in the supernatant, so 60% was precipitated with the pectin. When the protein was heated, the amount of precipitation with pectin was much higher. In fact > 95% of the protein could be precipitated with pectin at the optimum pH between pH 3 and 4. It is interesting to observe that at pH 3 the native sample with pectin showed an increase in solubility compared to pH 4 and the heated samples had still almost complete precipitation. This means that lowering the pH in the stomach will show a longer formation of insoluble structures.

### Low methylated pectin

High methylated pectin, especially with cold protein will only partly form complexes at low pH. Still a large part of the protein will be soluble. In order to improve this, a second trial was performed with low methylated pectin. LM pectins have a higher amount of negative charges and will therefore have more interactions with positive proteins. It appeared (see Fig. 2) that the amount of protein between pH 4 and 5 in the incubation of unheated protein with LM pectin was below 20%. Heating the whey protein caused much better precipitation behaviour. The best result was obtained when the whey protein was heated in the presence of the pectin. At pH 1, 70% of the protein was still in the precipitate. This precipitate was much less dense compared to for instance the precipitate obtained at pH 4.

### Complex coacervation of whey protein with carrageenan

Carrageenans are very different from pectins as they contain sulphate groups as negative charge. Pectins contain carboxylic acids, which can be protonated < pH 3.5, leading to lowering of the negative charge. The pKa of carrageenans is much lower, which means that in the stomach they will not be protonated. Iota and kappa carrageenan, the two mostly used carrageenans tend to form gels below a certain temperature, depending on the cations present. In case of the 2% solutions used in these studies, these temperatures are in the range of 40°C (kappa) and 50°C (iota). Therefore the mixtures with carrageenans were all prepared at 50°C. After sampling, the samples were set to cool down. The samples prepared with unheated whey protein and kappa carrageenan gelled at pH ≥ 6 as can be observed when the tubes are put upside down. A similar observation was made with iota carrageenan. When whey protein was heat treated before mixing with carrageenans, gelation already occurred at pH ≥ 3.0. Heating of carrageenans with whey protein together resulted in immediate gelation which could not be used for preparing pH curves.

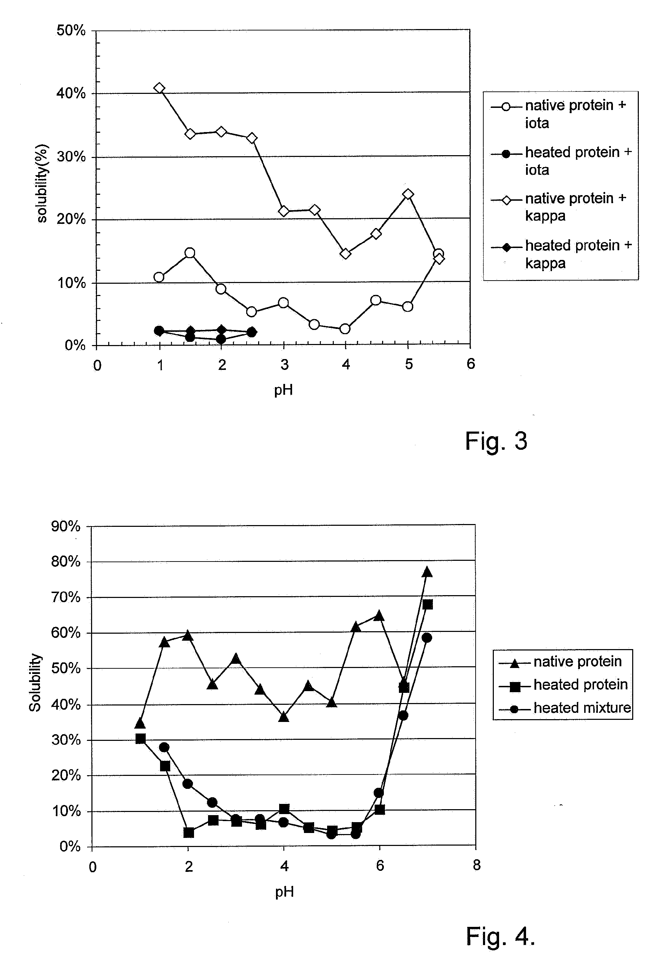

The complex formation as can be observed in figure 3 shows that iota carrageen complexed better than kappa-carrageenan which is in line with a higher negatively charged density. When the whey protein was heated, the complex formation for both kappa and iota carrageenan was very good, even in the range of pH 1 to 3. The only drawback was heat gelation above pH 3, which made it impossible to produce a liquid formulation. However, carrageenan would thus be suitable for a spoonable formulation or for a solid type bar.

### Complex coacervation of whey protein with xanthan

The complex formation of unheated whey protein with xanthan seemed to be less compared to pectin and carrageenan (Figure 4). Around 50% of the protein was complexed, with no clear pH profile. Heating the whey before addition of xanthan caused a high percentage of complex formation, between pH 2 and 6. Lowering the pH to values below 2 resulted in a decrease in complex formation. When whey protein was heated together with xanthan, the complex formation below pH 3 was somewhat less than the sample which has been prepared by mixing the heated whey with xanthan.

When a solution of whey and xanthan was titrated with HCl, structures were formed. These structures were dependent on the droplet size of the added HCl and the stirring speed. In addition, the appearance depended on whether or not the whey was preheated. The mixture of unheated whey with xanthan formed threads, the mixture of heated whey with xanthan formed more lumpy structures. When the mixture of heated whey and xanthan was set to pH 4, lumps make up the total mixture.

### Effect of carbohydrates on viscosity

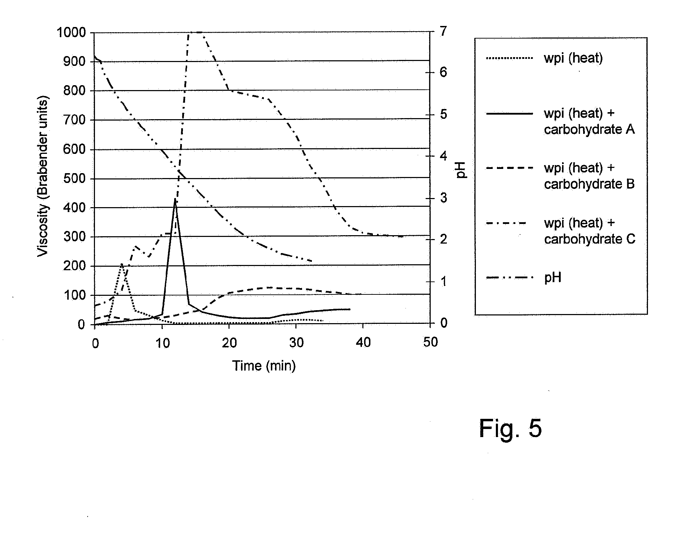

The viscosity of several mixtures of whey and carbohydrates was measured while titration of 8 ml 1M HCl was performed linearly in 30 minutes. It is clear from figure 5 that the type of carbohydrate is very important in this test. The whey without carbohydrates showed some viscosity at a relative high pH (∼5.5). Addition of low methylated pectin caused a shift towards pH 4. Xanthan clearly had the highest effect on viscosity; not only the intensity of the viscosity was superior, also the broadness of the peak over the pH range makes its very interesting.

### Example 2 Digestion experiments

### Stomach simulation (Brabender)

Measurement of the viscosity during gastric digestion conditions was performed in a Brabender Viscograph. Samples (300 ml) containing 5% whey protein and 0.5 % xanthan were put in a Brabender and heated to 37°C. Electrolyte (3,1 g NaCl, 1,1 g KCl, 0,15 g CaCl₂ and 0,60 g NaHCO₃)/pepsin solution was pumped into the whey/xanthan solution for 38 min at 2.4 ml/min. The electrolyte/pepsin solution consisted of 100 ml electrolyte solution with 20.5 mg pepsin (2870U/mg) mixed with 60 ml 1M HCl.

### Digestion experiments

The following combinations were tested to investigate the digestion of proteins during gastric digestion simulation:
1. 5% whey protein unheated
2. 5% whey protein heated
3. 5% whey protein unheated + 1% LM pectin
4. 5% whey protein heated + 1% LM pectin
5. 5% whey protein + 1% LM pectin heated together
40 ml of a 200 mg/ml pepsin solution was added to 200 ml solution of one of the above mentioned combinations in 120 min to reach a final pH of pH 1,6-1,7. After 20, 40, 60, 80, 100 and 120 min, 100 µl samples were taken and diluted with 900 µl 0.1M Tris/HCl pH 8.5 to inactivate pepsin. All samples were diluted 5 times with denaturation buffer and heated for 10 minutes at 99°C and used for SDS/PAGE.

### SDS/PAGE electrophoresis

SDS-PAGE was performed using a BioRad Mini Protean II system (BioRad, Hercules, CA, USA) with 15% acrylamide gels (15 x 10 cm). Molecular weight markers with molecular weights of 14.4, 20.1 30, 43, 67 and 94 kDa were used as reference. Samples were mixed in a 1 to 1 ratio with 63 mM TRIS buffer (pH 6.8) containing 5% mercaptoethanol, 2% SDS, 0.01% bromophenol blue and 20% (v/v) glycerol and were subsequently boiled for 5 minutes. Gels were stained by adding 2.5 ml 1% CBB R250 in ethanol to 50 ml 12.5 % TCA that was used for fixation. De-staining was done with 12.5 % TCA.

### Pepsin digestion of wheylpectin mixtures

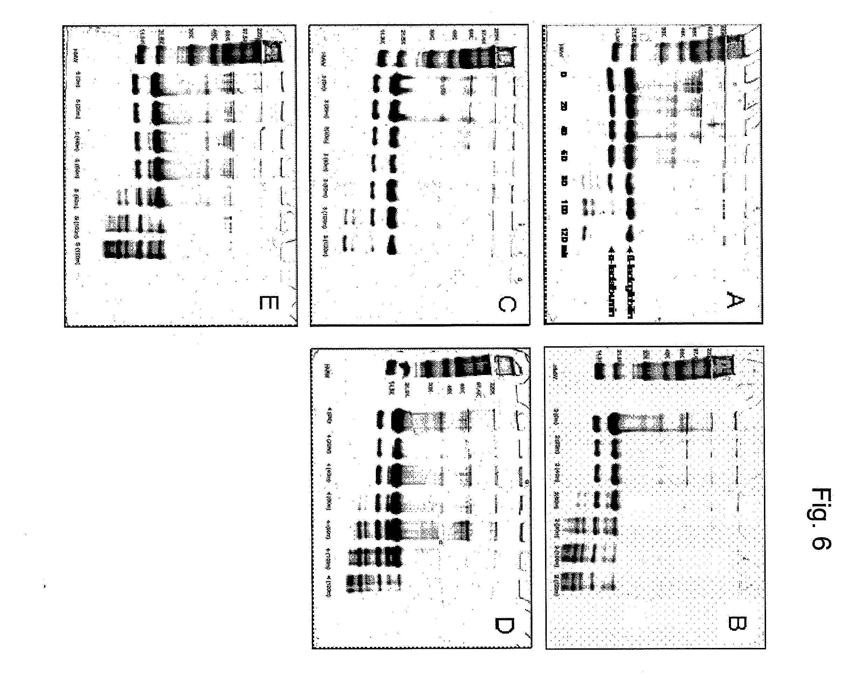

Digestion experiments were performed in order to see whether addition of carbohydrate would alter the digestion of the whey proteins. The digestion can be altered by an increased viscosity which limits the diffusion of pepsin or by a specific interaction of the carbohydrate with pectin. In these experiments only LM pectin was tested. Figure 6A shows the digestion profile of unheated whey. Clearly the α-lactalbumin (14 kDa) disappeared as a result of pepsin hydrolysis, the β-lactoglobulin was fully stable during pepsin digestion. This latter phenomenon is well known in literature. Heating the whey solutions (Figure 6B) changed this: β-lactoglobulin was digested almost fully in this test, some α-lactalbumin remained after 120 min, which would indicate a somewhat slower digestion of this protein compared to the unheated α-lactalbumin. The addition of LM pectin to a solution of unheated whey (Figure 6C) showed a slower digestion of α-lactalbumin; again β-lactoglobulin was not digested. The addition of LM pectin to a heated whey protein solution showed a slower digestion of α-lactalbumin and β-lactoglobulin (Figure 6D), than the results without pectin indicating that the addition of LM pectin has decreased the digestion. It is interesting to see that heating a solution of whey protein together with pectin gave a lowered digestion of β-lactoglobulin and it seems that α-lactalbumin was completely stable (figure 6E).

### TIM

In this project the Tiny-TIM system Flood and Chemical Toxicology, Volume 42, Issue 5, May 2004, Pages 817-824 was used simulating closely the successive dynamic conditions in the human stomach and small-intestine. The experiments in Tiny-TIM were performed under the average physiological conditions in the stomach and small-intestine as described for humans (young adults) after the intake of a liquid meal relevant for this type of test products. The simulated parameters were among others: body temperature of 37°C; the swallowing of saliva containing α-amylase; the pH curve in the gastric compartment in relation to secretion of gastric acid; concentrations of pepsin and gastric-lipase in the stomach; the secretion of bicarbonate (up to pH 6.8). as described *(*Food and Chemical Toxicology, Volume 42, Issue 5, May 2004, Pages 817-824) 125 g of the test product was mixed with artificial saliva. After 5 minutes of preincubation at 30 °C with saliva, 125 g of the mixture was put into the gastric compartment of the model, containing 5 ml gastric residue with pepsin at pH 2. The gastric content with the test product was gradually delivered into the small intestine via the 'pyloric sphincter'. The digested material was collected at different time intervals.

The addition of acid was based upon the total amount of acid needed to reach a pH of 1.7 after 60 minutes All samples were collected. The volumes of the fractions were measured, the samples were lyophilized and the weight and the protein content were measured. In comparison with a calculated reference (based on the dilution factor in the TIM experiment) all samples showed a slower emptying of the stomach. The best result was obtained with the combination of heated whey with xanthan.

### SDS/Page electrophoresis of residual samples

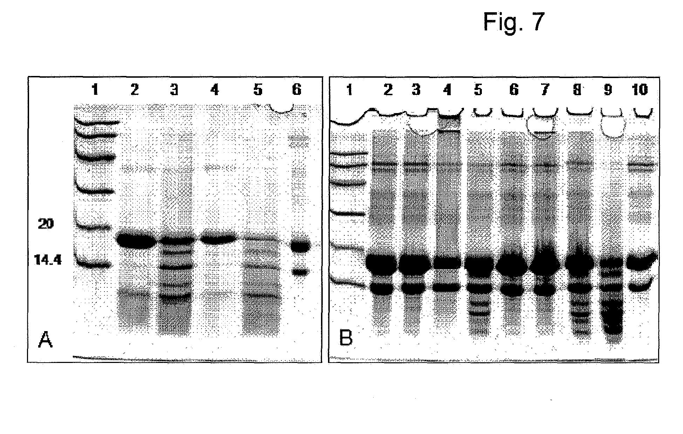

All samples from the TIM experiments were analyzed by SDS/Page electrophoresis. Figure 7A only shows the residue fractions. These are the fractions that have the largest breakdown. It is clear that the unheated samples had the slowest breakdown, these samples showed a complete breakdown of α-lactalbumin and no breakdown of β-lactoglobulin as could be expected. The heated samples showed breakdown of β-lactoglobulin and less breakdown of α-lactalbumin. The samples of heated whey with xanthan (lane 5) showed less protein compared to the other samples, the reason for this is unclear, but it might be related to the bad solubility of the whey/xanthan complex.

In Figure 7B the fractions are shown from 0-120 min of the TIM runs of whey (unheated and heated) with xanthan. It shows that the digestion of the residue was much improved in the last sample taken between 90-120 min.

### Conclusion

The complex coacervation technique is a nice tool to form structures upon lowering the pH. The order of the tested carbohydrates with respect to their complex formation with unheated protein at low pH is iota carrageenan > kappa-carrageenan > LM pectin > HM pectin > xanthan. Though the complex formation with the carrageenans was the best, these solutions form gelled product at pH ≥ 6. This means that they can only be used in solid like structures like desserts and bars. The complex formation of the pectins and xanthan at pH ≤ 4 is limited due to protonation of the carboxylic acids of the carbohydrates. The solution to overcome this problem is by heating the whey protein. The interaction of heated whey protein with the tested carbohydrates at low pH is much higher than the unheated whey protein. The only drawback is that heating the whey will enhance the digestibility of β-lactoglobulin, the protein which is the major protein in whey, which is normally not digested by pepsin. This means that complex coacervation with heated whey will be reduced by breakdown of β-lactoglobulin.

The final test in the TIM system showed that the formation of structures in the stomach retard the emptying of the stomach and therefore that complex coacervation works with heated as well as unheated whey. The best results were obtained with heated whey in combination with xanthan.

It has to be mentioned that the concentrations of 5% whey protein in combination with 1 or 0.5% carbohydrate were chosen in order to be able to test the complex formation in test-tubes. Higher concentrations of protein were omitted as mixing these properly in test tubes caused problems. Higher protein concentrations, however, are expected to perform as well or even better in TIM or human tests.

## Claims

1. A satiety-inducing food composition, which is fluid at neutral pH and which shows an increase in viscosity and forms a gel at acid pH, wherein the composition comprises at least a negatively loaded carbohydrate and at least a protein with an iso-electric point of about pH 3.5-5.5.

2. A satiety-inducing food composition according to claim 1, wherein the carbohydrate is chosen from the group consisting of pectin, xanthan, iota-carrageenan and kappa-carrageenan, gum Arabic, and alginate.

3. A satiety-inducing food composition according to claim 1 or 2, wherein the carbohydrate is present in an amount from 0.25 to 30% by weight of the total composition, preferably from 0.5 to 5% by weight

4. A satiety-inducing food composition according to any of the previous claims, wherein the protein has an iso-electric point of about pH 4-5.

5. A satiety-inducing food composition according to any of the previous claims, wherein the protein is selected from the group consisting of whey proteins, β-lactoglobulin, α-lactalbumin, soy protein, wheat protein, gelatin, pea protein and egg protein

6. A satiety-inducing food composition according to any of the previous claims, wherein the protein is present in an amount from 5 to 25% by weight of the total food preparation, more preferably from 5 to 15% by weight

7. A satiety-inducing food composition according to any of the previous claims, wherein the composition additionally comprises one or more ingredients selected from the group consisting of lipids, such as vegetable fats, animal fats and mono-, di- or tri-glycerides; emulsifiers, such as lecithin and egg yolk; flavourants; herbs; spices; colorants; fruit or vegetable particles, concentrates, juice or puree; cholesterol lowering agents, such as isoflavones and phytosterols; energizers, such as caffeine, thein, cathechins, capsaicinoids and canitine; vitamins; sweeteners; antioxidants; preservatives; probiotics; minerals and alkaline metals.

8. A satiety-inducing food composition according to one of the previous claims, wherein the protein is preheated before adding to the composition.

9. A satiety-inducing food composition according to claim 8, wherein the preheating comprises 30 min incubation of said food composition at a temperature of about 75 °C or more, preferably at about 90 °C or more.

10. A satiety-food inducing composition according to claim 8 or claim 9, wherein the protein is preheated in the presence of the carbohydrate.

11. Method to produce a satiety-inducing food composition according to any of the previous claims comprising solving at least a negatively loaded carbohydrate and at least a protein with an iso-electric point of about pH 3.5 - 5.5 in a fluid at neutral pH.

12. Method according to claim 11, wherein the fluid is water, milk, tea, coffee, yogurt or any other dairy product, fruit juice, or vegetable juice.

13. Method according to claim 11 or 12, wherein the protein is preheated before adding to the composition.

14. Method according to claim 13, wherein the preheating comprises 30 min incubation of said food composition at a temperature of about 75 °C or more, preferably at about 90 °C or more.

15. A solid satiety-inducing food composition, preferably a food bar, wherein said composition comprises at least a negatively charged carbohydrate and at least a protein with an iso-electric point of about pH 3.5 - 5.5 in which the carbohydrate and protein dissolve in the mouth and stomach, wherein said composition is fluid when solved at neutral pH and increase in viscosity and forms a gel when solved at acid pH.
